# EUROPEAN PATENT APPLICATION

(11) **EP 3 910 734 A1**
(43) Date of publication of application: **17.11.2021**
(21) Application number: 20208996.7
(22) Date of filing: 20.11.2020
(51) Int. Cl.: H01Q 1/24, H01Q 5/328, H01Q 5/335

(54) **ANTENNA STRUCTURE AND ELECTRONIC EQUIPMENT**

(30) Priority: 13.05.2020 CN 202010402078
(71) Applicant: Beijing Xiaomi Mobile Software Co., Ltd., Beijing 100085 (CN)
(72) Inventor: WANG, Ching-Sung, Beijing, 100085 (CN)
(74) Representative: Gevers Patents

(57) **Abstract**

Embodiments herein relate to an antenna structure (100) and electronic equipment (200, 1800). The antenna structure (100) includes a nonmetallic frame (3), a radiator (2), and a Synthetic Aperture Radar, SAR, sensor (4). The radiator (2) is suspended inside the nonmetallic frame (3). The SAR sensor (4) is connected to the radiator (2). The SAR sensor (4) is configured for detecting capacitance between the radiator (2) and a user.

## Description

### TECHNICAL FIELD

The subject disclosure relates to the field of User Equipment (UE), and more particularly, to an antenna structure and electronic equipment.

### BACKGROUND

With continuing development of wireless communication technology, smart UE has become an indispensable part of life. To cover more frequency bands, smart UE has to be equipped with an increasing number of antenna structures, posing an increasingly high requirement on an internal space of the smart UE. Moreover, with development of a data network such as that of 3G, 4G, 5G, etc., an antenna structure becomes increasingly complicated, with an increasing number of frequency bands to be covered. Consequently, impact of radiation of an electromagnetic wave of smart UE on human body has become a common concern of the industry.

### SUMMARY

In view of this, embodiments herein provide an antenna structure and electronic equipment.

According to an aspect herein, an antenna structure includes a nonmetallic frame, a radiator, and a Synthetic Aperture Radar (SAR) sensor.

The radiator is suspended inside the nonmetallic frame.

The SAR sensor is connected to the radiator. The SAR sensor is configured for detecting capacitance between the radiator and a user.

With embodiments herein, a nonmetallic frame may wrap and fix a radiator, such that the nonmetallic frame and the radiator may form one piece. Later on, the one piece formed by the nonmetallic frame and the radiator may be formed inside a border, a middle frame, or a housing of any material, avoiding additional space being occupied by the radiator. Further, a SAR value may be detected by providing a SAR sensor connected to the radiator, facilitating adjustment of the SAR value of an antenna structure, avoiding excessive radiation to a user.

The antenna structure may further include a metallic frame.

The metallic frame may include an opening. Both the nonmetallic frame and the radiator may be provided inside the opening. The metallic frame may be separate from the radiator.

The antenna structure may further include an antenna feed point and a first elastic piece.

The first elastic piece may be configured for connecting the antenna feed point to the radiator.

The antenna structure may further include a first isolator unit.

The first isolator unit may be configured for isolating signal interference between the SAR sensor and the radiator.

The first isolator unit may include a first inductor and a first capacitor. The first inductor may be connected in series between the radiator and the SAR sensor. A first end of the first capacitor may be grounded. A second end of the first capacitor may be connected between the SAR sensor and the first inductor.

The antenna structure may further include a matching circuit and a second isolator unit.

The matching circuit may be connected to a radio frequency front end and the radiator.

A first end of the second isolator unit may be connected to the antenna feed point. A second end of the second isolator unit may be connected to the matching circuit.

The matching circuit may include a second inductor. The second inductor may be grounded. The second isolator unit may include a second capacitor. The second capacitor may be connected in series between the antenna feed point and the second inductor.

The antenna structure may further include a radio frequency switch circuit and a third isolator unit.

The radio frequency switch circuit may be grounded.

A first end of the third isolator unit may be connected to the radio frequency switch circuit. A second end of the third isolator unit may be connected to the radiator.

A first end of the first isolator unit may be connected to the SAR sensor. A second end of the first isolator unit may be connected between the third isolator unit and the radiator.

A first end of the first isolator unit may be connected to the antenna feed point. A second end of the first isolator unit may be connected to the SAR sensor.

The third isolator unit may include a third capacitor and a third inductor. The third capacitor may be connected in series between the radio frequency switch circuit and the radiator. A first end of the third inductor may be grounded. A second end of the third inductor may be connected between the third capacitor and the radio frequency switch circuit.

According to an herein, electronic equipment includes any antenna structure herein and a processor.

The processor is adapted to adjusting transmit power of a radio frequency circuit of the antenna structure according to capacitance detected by the SAR sensor.

The advantages and technical effects of electronic equipment herein correspond to those of an antenna structure herein.

The electronic equipment may include a side frame.

Both the nonmetallic frame and the radiator of the antenna structure may be provided inside the side frame.

The above general description and detailed description below are but exemplary and explanatory, and do not limit the subject disclosure.

### BRIEF DESCRIPTION OF THE ACCOMPANYING DRAWINGS

Drawings here are incorporated in and constitute part of the subject disclosure, illustrate embodiments according to the subject disclosure, and together with the subject disclosure, serve to explain the principle of the subject disclosure.
FIG. 1 is a diagram of an antenna structure according to an exemplary embodiment.
FIG. 2 is a diagram of an antenna structure according to an exemplary embodiment.
FIG. 3 is a diagram of an antenna structure according to an exemplary embodiment.
FIG. 4 is a diagram of an antenna structure according to an exemplary embodiment.
FIG. 5 is a diagram of a circuit of an antenna structure according to an exemplary embodiment.
FIG. 6 is a diagram of a circuit of an antenna structure according to an exemplary embodiment.
FIG. 7 is a diagram of a circuit of an antenna structure according to an exemplary embodiment.
FIG. 8 is a diagram of a structure of electronic equipment according to an exemplary embodiment.
FIG. 9 is a block diagram of electronic equipment according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are mere examples of the apparatus (i.e., device / equipment / terminal) and or method in accordance with certain aspects of the subject disclosure as recited in the accompanying claims. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and or method in accordance with certain aspects herein as recited in the accompanying claims.

Terms used in the subject disclosure are for describing specific embodiments instead of limiting the subject disclosure. Singulars "a/an", "said" and "the" used in the subject disclosure and the appended claims are intended to include the plural form, unless expressly illustrated otherwise by context. The term "and / or" used in the subject disclosure refers to and includes any or all possible combinations of one or more associated items listed.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a term "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

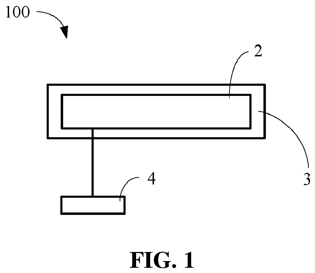

FIG. 1 is a diagram of an antenna structure 100 according to an exemplary embodiment. As shown in FIG. 1, the antenna structure 100 may include a radiator 2 and a nonmetallic frame 3. The radiator 2 may be suspended inside the nonmetallic frame 3. One nonmetallic frame 3 may include one or more radiators 2. Any two of multiple radiators 2 wrapped by one nonmetallic frame 3 do not touch each other, avoiding impacting radiation of an antenna signal. The radiator 2 may be configured to radiate the antenna signal of the antenna structure 100. For example, the antenna signal may include one or more of a 2G signal, a 3G signal, a 4G signal, a 5G signal, a wifi signal, etc.

The antenna structure 100 may further include a Synthetic Aperture Radar (SAR) sensor 4. The SAR sensor 4 may be connected to the radiator 2. The SAR sensor 4 may detect capacitance between the radiator 2 and a user. Based on capacitance detected by the SAR sensor 4, the distance between the user and the antenna structure 100 may be estimated. Accordingly, when the user is close to the antenna structure 100, the transmit frequency of the antenna structure 100 may be adjusted to reduce the SAR value of the antenna structure 100 to an allowable range.

It can be seen that herein, the nonmetallic frame 3 may limit the radiator 2, such that the nonmetallic frame and the radiator may form one piece. Later on, the one piece formed by the nonmetallic frame 3 and the radiator 2 may be formed inside a border, a middle frame, or a housing of any material, avoiding additional space being occupied by the radiator 2. Further, a SAR value may be detected by providing a SAR sensor 4 connected to the radiator 2, facilitating adjustment of the SAR value of the antenna structure 100, avoiding excessive radiation to a user.

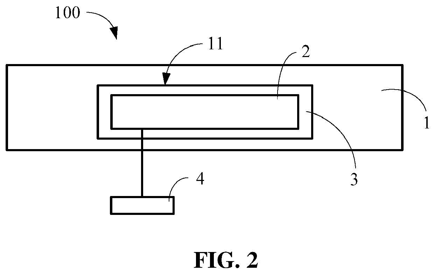

As shown in FIG. 2, the antenna structure 100 may further include a metallic frame 1. The metallic frame 1 may include an opening 11. The nonmetallic frame 3 may be connected to the inner side wall of the opening 11. That is, both the radiator 2 and the nonmetallic frame 3 may be provided inside the opening 11. Accordingly, space dedicated to the radiator 2 inside electronic equipment provided with the antenna structure 100 is not required. The opening 11 may be a groove or a through hole passing through the metallic frame 1. The nonmetallic frame 3 may be formed using an injection molding process based on a preset relation between locations of the metallic frame 1 and the radiator 2. Alternatively, the metallic frame 1 may be formed using an MDA process, and a part of the metallic frame 1 may be wrapped by nonmetallic material to serve as the radiator 2 to radiate an antenna signal. The design thereof may be made as needed, and is not limited hereto.

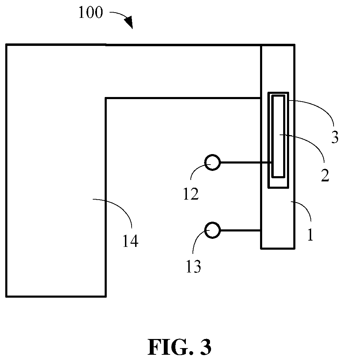

In order to enrich frequency bands of radiation of the antenna structure 100, the antenna structure 100 may further include another radiator in addition to the radiator 2. For example, as shown in FIG. 3, the metallic frame 1 per se or a part of the metallic frame 1 may serve as an antenna radiator. In FIG. 3, a part of the metallic frame 1 serving as an antenna radiator may be provided with an opening 11 and may be connected to an antenna feed point 13 to expand an antenna frequency band coverable by the antenna structure 100. Furthermore, the metallic frame 1 may further include a grounding plate 14 and a second elastic piece (not shown). A circuit board may be provided on the grounding plate 14. A peripheral circuit of the antenna structure 100 may be burned on the circuit board. The radiator 2 may be connected to a grounding point on the circuit board through the second elastic piece.

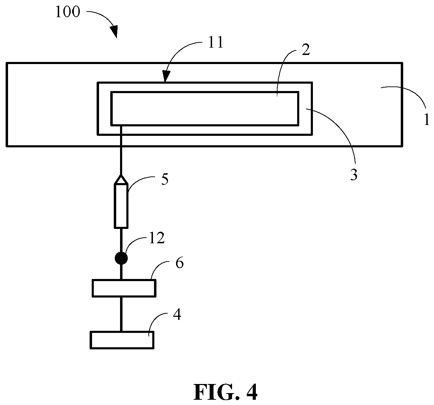

As shown in FIG. 4, the antenna structure 100 may further include an antenna feed point 12 and a first elastic piece 5. The first elastic piece 5 may be configured for connecting the antenna feed point 12 and the radiator, implementing signal transmission between the radiator 3 and the antenna circuit.

Again as shown in FIG. 4, to avoid interfering with an operating signal of the SAR sensor 4 by a signal radiated by the radiator 2, the antenna structure 100 may further include a first isolator unit 6. The first end of the first isolator unit 6 may be connected to the SAR sensor 4. The second end of the first isolator unit 6 may be connected to the radiator 2. The first isolator unit 6 may allow a low-frequency operating signal (of 120KHz- 140KHz in general) of the SAR sensor 4, but not a radio frequency signal of the radiator 2, to pass through.

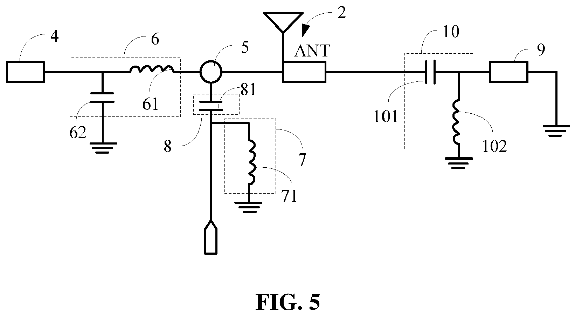

In order to improve antenna efficiency of the antenna structure 100, as shown in FIG. 5, the antenna structure 100 may further include a matching circuit 7. The matching circuit 7 may be connected to the radiator 2 and a radio frequency front end of the antenna structure 100 to perform impedance matching on the received antenna signal, improving the antenna efficiency. To avoid interference between the signal of the matching circuit 7 and the signal of the SAR sensor 4, the antenna structure 100 may further include a second isolator unit 8. The first end of the second isolator unit 8 may be connected to the antenna feed point 12. The second end of the second isolator unit 8 may be connected to the matching circuit 7. Accordingly, the SAR sensor 4 may be isolated from the grounding signal in the matching circuit 7 through the second isolator unit 8, avoiding impacting normal detection by the SAR sensor 4.

In another embodiment, again as shown in FIG. 5, to expand the frequency band covered by the antenna structure 100, and allow electronic equipment provided with the antenna structure 100 to cover as many frequency bands covering 2G-5G signals as possible, the antenna structure 100 may further include a radio frequency switch circuit 9 and a third isolator unit 10. The radio frequency switch circuit 9 may be grounded. A frequency band of an electromagnetic wave radiated by the antenna structure 100 may be adjusted to cover multiple frequency bands of 2G-5G signals by adjusting a capacitor or an inductor connected to the radiator 2. One end of the third isolator unit 10 may be connected to the radio frequency switch circuit 9. The second end of the third isolator unit may be connected to the radiator 2. With the third isolator unit 10, interference between the radio frequency switch circuit 9 and the SAR sensor 4 may be avoided.

When the antenna structure 100 includes at least one of the matching circuit 7 or the radio frequency switch circuit 9, the SAR sensor 4 may be connected to the first isolator unit 6 in multiple modes, as listed below.

Again as shown in FIG. 5, one end of the first isolator unit 6 may be connected to the SAR sensor 4. The other end of the first isolator unit may be connected to the antenna feed point 12. Accordingly, the SAR sensor 4 may be connected to the radiator 2 through the antenna feed point 12, reducing the number of wires led from the radiator 2, reducing impact on capacity of radiation of the radiator 2.

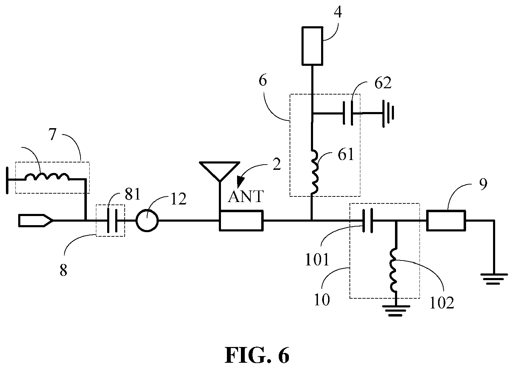

In another embodiment, as shown in FIG. 6, the first isolator unit 6 may be connected to the SAR sensor 4 at one end, and at the other end connected between the third isolator unit 10 and the radiator 2. That is, the SAR sensor 4 and the first isolator unit 6 may be connected to the radiator 2 by being connected in parallel with the third isolator unit 10, reducing the number of wires led from the radiator 2, reducing impact on capacity of radiation of the radiator 2.

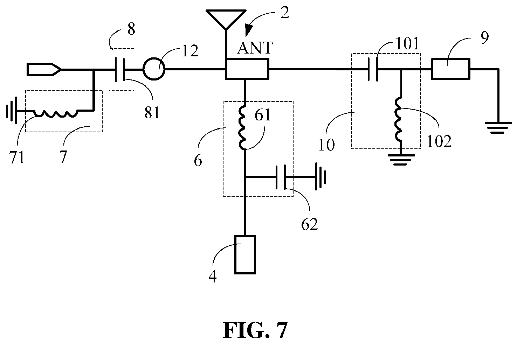

In another embodiment, as shown in FIG. 7, the antenna structure 100 may further include a second elastic piece (not shown). One end of the first isolator unit 6 may be connected to the SAR sensor 4. The second end of the first isolator unit may be connected to the radiator 2 through the second elastic piece. That is, the SAR sensor 4 and the first isolator unit 6 may be connected to the radiator 2 independent of the matching circuit 7 and the radio frequency switch circuit 9, simplifying the circuit.

As shown in any embodiment shown in FIG. 5 to FIG. 7, the first isolator unit 6 may include a first inductor 61 and a first capacitor 62. The first inductor 61 may be connected in series between the radiator 2 and the SAR sensor 4. The first end of the first capacitor 62 may be grounded. The second end of the first capacitor may be connected between the SAR sensor 4 and the first inductor 61. The first inductor 61 may allow a low-frequency operating signal of the SAR sensor 4 to be transmitted to the radiator 2, while stopping a radio frequency signal from the radiator 2 and the matching circuit 7. The first capacitor 62 may isolate the SAR sensor 4 from the grounding point of the system, while filtering out a radio frequency signal, thereby ensuring that operation of the SAR sensor 4 is not affected by the radio frequency signal.

Similarly, again as shown in any embodiment in FIG. 5 to FIG. 7, the matching circuit 7 may include a second inductor 71 that is grounded. The second isolator unit 8 may include a second capacitor 81. The second capacitor may be connected in series between the second inductor 71 and the antenna feed point 12. Accordingly, the SAR sensor 4 may be isolated, through the second capacitor 81, from a grounding point in the radio frequency front end as well as the grounding point connected to the second inductor 71. The second capacitor 81 may isolate a low-frequency signal from the SAR sensor 4, while allowing a radio frequency signal from the matching circuit 7 to pass through, thereby avoiding impact on the matching circuit 7 by the low-frequency signal of the SAR sensor 4.

Similarly, again as shown in any embodiment in FIG. 5 to FIG. 7, the third isolator unit 10 may include a third capacitor 101 and a third inductor 102. The third capacitor 101 may be connected in series between the radio frequency switch circuit 9 and the radiator 2. The first end of the third inductor 102 may be grounded. The second end of the third inductor may be connected between the third capacitor 101 and the radio frequency switch circuit 9. Accordingly, the third capacitor 101 may isolate a low-frequency signal from the SAR sensor 4, while allowing a radio frequency signal from the radio frequency switch circuit 9 to pass through, thereby avoiding impact on the radio frequency switch circuit 9 by the low-frequency signal of the SAR sensor 4.

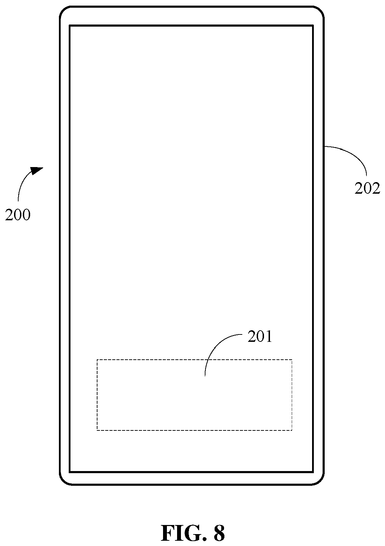

Based on a technical solution herein, as shown in FIG. 8, embodiments herein further provide electronic equipment 200. The electronic equipment 200 may include the antenna structure 100 according to any embodiment herein. The electronic equipment 200 may further include a processor 201. The processor 201 may be adapted to adjusting transmit power of a radio frequency circuit of the antenna structure 100 according to capacitance detected by the SAR sensor 4, thereby reducing the SAR value of the electronic equipment 200, facilitating well-being of a user.

The electronic equipment 200 may further include a side frame 202. Both the nonmetallic frame 3 and the radiator 2 may be provided inside the side frame 2, thereby avoiding occupation of internal space of the electronic equipment 200 by the radiator 2, while increasing frequency bands covered by the electronic equipment 200, optimizing user experience. The side frame 202 may be a metallic frame or a nonmetallic frame. If the side frame 202 is metallic, the side frame 202 may have to be isolated from the radiator 2 using the nonmetallic frame 3 to avoid signal interference. The electronic equipment 200 may include a mobile phone UE, a tablet UE, other communication UE, etc., which is not limited hereto.

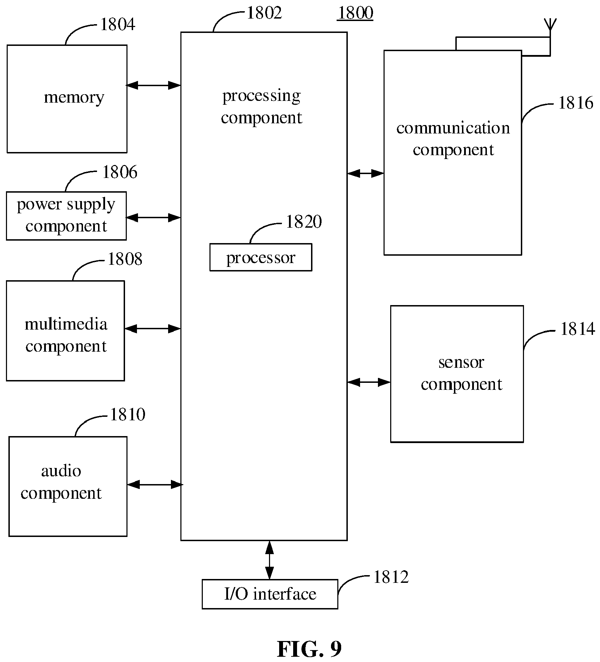

FIG. 9 is a block diagram of electronic equipment 1800 according to an exemplary embodiment. For example, the electronic equipment 1800 may be UE such as a mobile phone, a computer, digital broadcast UE, messaging equipment, a gaming console, tablet equipment, medical equipment, fitness equipment, a personal digital assistant, etc.

Referring to FIG. 9, the electronic equipment 1800 may include at least one of a processing component 1802, memory 1804, a power supply component 1806, a multimedia component 1808, an audio component 1810, an Input / Output (I / O) interface 1812, a sensor component 1814, a communication component 1816, etc.

The processing component 1802 may generally control an overall operation of the electronic equipment 1800, such as operations associated with display, a telephone call, data communication, a camera operation, a recording operation, etc. The processing component 1802 may include one or more processors 1820 to execute instructions so as to complete all or a part of a method. In addition, the processing component 1802 may include one or more modules to facilitate interaction between the processing component 1802 and other components. For example, the processing component 1802 may include a multimedia portion to facilitate interaction between the multimedia component 1808 and the processing component 1802.

The memory 1804 may be adapted to storing various types of data to support the operation at the electronic equipment 1800. Examples of such data may include instructions of any APP or method adapted to operating on the electronic equipment 1800, contact data, phonebook data, messages, pictures, videos, etc. The memory 1804 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 1806 may supply electric power to various components of the electronic equipment 1800. The power supply component 1806 may include a power management system, one or more power sources, and other components related to generating, managing, and distributing electricity for the electronic equipment 1800.

The multimedia component 1808 may include a screen that provides an output interface between the electronic equipment 1800 and a user. The screen may include a Liquid Crystal Display (LCD), a Touch Panel (TP), etc. If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 1808 may include at least one of a front camera or a rear camera. When the electronic equipment 1800 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 1810 may be adapted to outputting and / or inputting an audio signal. For example, the audio component 1810 may include a microphone (MIC). When the electronic equipment 1800 is in an operation mode such as a call mode, a recording mode, a voice recognition mode, etc., the MIC may be adapted to receiving an external audio signal. The received audio signal may be further stored in the memory 1804 or may be sent via the communication component 1816. The audio component 1810 may further include a loudspeaker adapted to outputting the audio signal.

The I/O interface 1812 may provide an interface between the processing component 1802 and a peripheral interface portion. Such a peripheral interface portion may be a keypad, a click wheel, a button, etc. Such a button may include but is not limited to at least one of a homepage button, a volume button, a start button, or a lock button.

The sensor component 1814 may include one or more sensors for assessing various states of the electronic equipment 1800. For example, the sensor component 1814 may detect an on/off state of the electronic equipment 1800 and relative positioning of components such as the display and the keypad of the electronic equipment 1800. The sensor component 1814 may further detect a change in the location of the electronic equipment 1800 or of a component of the electronic equipment 1800, whether there is contact between the electronic equipment 1800 and a user, the orientation or acceleration / deceleration of the electronic equipment 1800, a change in the temperature of the electronic equipment 1800, etc. The sensor component 1814 may include a proximity sensor adapted to detecting existence of a nearby object without physical contact. The sensor component 1814 may further include an optical sensor such as a Complementary Metal-Oxide-Semiconductor (CMOS) or a Charge-Coupled-Device (CCD) image sensor used in an imaging APP. The sensor component 1814 may further include an acceleration sensor, a gyroscope sensor, a magnetic sensor, a pressure sensor, a temperature sensor, etc.

The communication component 1816 may be adapted to facilitating wired or wireless communication between the electronic equipment 1800 and other equipment. The electronic equipment 1800 may access a wireless network based on a communication standard such as Wi-Fi, 2G, 3G..., or a combination thereof. The communication component 1816 may broadcast related information or receive a broadcast signal from an external broadcast management system via a broadcast channel. The communication component 1816 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

In an exemplary embodiment, the electronic equipment 1800 may be realized by one or more electronic components such as an APP Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement a method.

In an exemplary embodiment, a transitory or non-transitory computer-readable storage medium including instructions, such as memory 1804 including instructions, may be provided. The instructions may be executed by the processor 1820 of the electronic equipment 1800 to implement a method. For example, the transitory or non-transitory computer-readable storage medium may be Read-Only Memory (ROM), Random Access Memory (RAM), Compact Disc Read-Only Memory (CD-ROM), a magnetic tape, a floppy disk, optical data storage equipment, etc.

A transitory or non-transitory computer-readable storage medium has stored thereon instructions which, when executed by a processor of a device for identifying a gesture, enable the device to implement a method.

Further note that herein by "multiple", it may mean two or more. Other quantifiers may have similar meanings. A term "and / or" may describe an association between associated objects, indicating three possible relationships. For example, by A and / or B, it may mean that there may be three cases, namely, existence of but A, existence of both A and B, or existence of but B. A slash mark "/" may generally denote an "or" relationship between two associated objects that come respectively before and after the slash mark. Singulars "a/an", "said" and "the" are intended to include the plural form, unless expressly illustrated otherwise by context.

Further note that although a term such as first, second, etc., may be adopted to describe various kinds of information, such information should not be limited to such a term. Such a term is merely for distinguishing information of the same type, without indicating any specific or der or degree of importance. In fact, expressions such as "first", "second", etc., are completely interchangeable in usage. For example, without departing from the scope of embodiments herein, first information may also be referred to as second information. Similarly, second information may also be referred to as first information.

Further note that although in drawings herein operations are described in a specific or der, it should not be construed as that the operations have to be performed in the specific or der or sequence, or that any operation shown has to be performed in or der to acquire an expected result. Under a specific circumstance, multitask and parallel processing may be advantageous.

Other implementations of the subject disclosure will be apparent to a person having ordinary skill in the art that has considered the specification and or practiced the subject disclosure. The subject disclosure is intended to cover any variation, use, or adaptation of the subject disclosure following the general principles of the subject disclosure and including such departures from the subject disclosure as come within common knowledge or customary practice in the art. The specification and the embodiments are intended to be exemplary only, with a scope of the subject disclosure being indicated by the appended claims.

Note that the subject disclosure is not limited to the exact construction that has been described above and illustrated in the accompanying drawings, and that various modifications and changes can be made to the subject disclosure without departing from the scope of the subject disclosure. It is intended that the scope of the subject disclosure is limited only by the appended claims.

## Claims

1. An antenna structure (100), comprising:
a nonmetallic frame (3);
a radiator (2) suspended inside the nonmetallic frame (3); and
a Synthetic Aperture Radar, SAR, sensor (4) connected to the radiator (2), the SAR sensor (4) being configured for detecting capacitance between the radiator (2) and a user.

2. The antenna structure (100) of claim 1, further comprising a metallic frame,
the metallic frame comprising an opening (11), both the nonmetallic frame (3) and the radiator (2) being provided inside the opening (11), the metallic frame being separate from the radiator (2).

3. The antenna structure (100) of claim 1, further comprising:
an antenna feed point (12, 13); and
a first elastic piece (5) configured for connecting the antenna feed point (12, 13) to the radiator (2).

4. The antenna structure (100) of claim 3, further comprising:
a first isolator unit (6) configured for isolating signal interference between the SAR sensor (4) and the radiator (2).

5. The antenna structure (100) of claim 4, wherein the first isolator unit (6) comprises a first inductor (61) and a first capacitor (62), the first inductor (61) being connected in series between the radiator (2) and the SAR sensor (4), a first end of the first capacitor (62) being grounded, a second end of the first capacitor (62) being connected between the SAR sensor (4) and the first inductor (61).

6. The antenna structure (100) of claim 4, further comprising:
a matching circuit (7) connected to a radio frequency front end and the radiator (2); and
a second isolator unit (8), a first end of the second isolator unit (8) being connected to the antenna feed point (12, 13), a second end of the second isolator unit (8) being connected to the matching circuit (7).

7. The antenna structure (100) of claim 6, wherein the matching circuit (7) comprises a second inductor (71), the second inductor (71) being grounded, the second isolator unit (8) comprising a second capacitor (81), the second capacitor (81) being connected in series between the antenna feed point (12, 13) and the second inductor (71).

8. The antenna structure (100) of claim 4, further comprising:
a radio frequency switch circuit (9), the radio frequency switch circuit (9) being grounded; and
a third isolator unit (10), a first end of the third isolator unit (10) being connected to the radio frequency switch circuit (9), a second end of the third isolator unit (10) being connected to the radiator (2).

9. The antenna structure (100) of claim 8, wherein a first end of the first isolator unit (6) is connected to the SAR sensor (4), wherein a second end of the first isolator unit (6) is connected between the third isolator unit (10) and the radiator (2).

10. The antenna structure (100) of claim 4, wherein a first end of the first isolator unit (6) is connected to the antenna feed point (12, 13), wherein a second end of the first isolator unit (6) is connected to the SAR sensor (4).

11. The antenna structure (100) of claim 8, wherein the third isolator unit (10) comprises a third capacitor (101) and a third inductor (102), the third capacitor (101) being connected in series between the radio frequency switch circuit (9) and the radiator (2), a first end of the third inductor (102) being grounded, a second end of the third inductor (102) being connected between the third capacitor (101) and the radio frequency switch circuit (9).

12. Electronic equipment (200, 1800), comprising:
the antenna structure (100) of any one of claims 1 to 11; and
a processor (201) configured for adjusting transmit power of a radio frequency circuit of the antenna structure (100) according to capacitance detected by the SAR sensor (4).

13. The electronic equipment (200, 1800) of claim 12, comprising a side frame (202),
both the nonmetallic frame (3) and the radiator (2) of the antenna structure (100) being provided inside the side frame (202).
